# EUROPEAN PATENT SPECIFICATION

(11) **EP 3 552 861 B1**
(45) Date of publication and mention of the grant of the patent: **29.11.2023**
(21) Application number: 18305425.3
(22) Date of filing: 10.04.2018
(51) Int. Cl.: H02J 50/90, G05D 1/02, B60L 53/66

(54) **METHOD FOR POSITIONING AN ELECTRIC VEHICLE ON A CHARGING SPOT AND RELATED CHARGING SPOT**
VERFAHREN ZUR POSITIONIERUNG EINES ELEKTRISCHEN FAHRZEUGS AUF EINER LADESTELLE UND ZUGEHÖRIGE LADESTELLE
PROCÉDÉ DE POSITIONNEMENT D'UN VÉHICULE ÉLECTRIQUE SUR UN POINT DE CHARGE ET POINT DE CHARGE ASSOCIÉ

(43) Date of publication of application: 16.10.2019
(73) Proprietor: HAGER-ELECTRO SAS, 67210 Obernai (FR); Hager Electro GmbH & Co. KG, 66440 Blieskastel (DE)
(72) Inventor: Haenel, Frédéric, 67290 Lohr (FR); Kauffmann, Bruno, 67120 Dachstein (FR); Kraemer, Jacques, 67000 Strasbourg (FR); Meyer, Loic, 67114 Eschau (FR); Reiner, Ulrich, 67691 Hochspeyer (DE); Schmitt, Erwin, 67659 Kaiserlautern (DE); Simon, Michel, 60800 Dessenheim (FR)
(74) Representative: Cabinet Nuss

(56) References cited:
- EP-A1- 3 009 296
- EP-A1- 3 092 147
- WO-A1-2010/098412
- WO-A1-2013/136787
- CH-A5- 688 598
- US-A1- 2010 235 006
- US-A1- 2011 066 515
- US-A1- 2015 231 981
- US-A1- 2017 174 093
- Tesla: "Charger prototype finding its way to Model S", youtube, 6 August 2015 (2015-08-06), page 1 pp., XP054976837, Retrieved from the Internet: URL:https://www.youtube.com/watch?v=uMM0lR fX6YI [retrieved on 2016-10-12]
- Car TV: "Volkswagen E-smart Connect", youtube, 14 July 2015 (2015-07-14), page 1 pp., XP054976835, Retrieved from the Internet: URL:https://www.youtube.com/watch?v=-9VulK Sy5uw [retrieved on 2016-10-12]

## Description

The invention relates to the field of electric vehicles. More specifically, the invention relates to a method for positioning an electric vehicle on a charging spot and relates to a charging spot.

The document US 2017/0096073 discloses a charging station for electric vehicles comprising charging spots provided with underground system for electric charging and cooling of the electric vehicle. Each charging spot is also provided with contoured vehicle guides that help properly positioning the vehicle above the underground system. These contoured vehicle guides are raised above the ground surface and have a funnel shape that directs the vehicle into the correct position and indicates where to stop. For example, the vehicle guides, on the respective sides of the charging spot, can each have a curve that provides rolling resistance for the vehicle's front wheels if the vehicle is off to one side, or when the vehicle has pulled sufficiently far into the spot. The contoured vehicle guides can be made from any material of sufficient durability against the wear of vehicle wheels and the exposure to weather, for example, concrete. However, this method for positioning the electric vehicle lacks preciseness.

The aim of the invention is to remedy to this drawback by proposing a method for positioning an electric vehicle on a charging spot with a greater precision to ease the connection of a charger plug of the charging spot with a charging receiver of the electric vehicle.

For this purpose, the present invention relates to a method for positioning an electric vehicle on a charging spot according to claim 1.

The invention also relates to a charging spot according to claim 9.

The invention will be better understood using the description below, which relates to at least one preferred embodiment, given by way of non-limiting examples and explained with reference to the accompanying drawings, in which:
- figure 1 shows a plurality of parking spots and a plurality of electric vehicles,
- figures 2A, 2B, 2C and 3 show an electric vehicle moving on a parking spot of a charging spot according to the invention from a parking position to an alignment position,
- figure 4 shows an electric vehicle on the parking spot of the charging spot according to the invention in an alignment position,
- figure 5 shows an electric vehicle comprising a plurality of charging receivers on the parking spot of the charging spot according to the invention in an alignment position,
- figures 6 and 7 show an electric vehicle on a charging spot according to a non-limitative possibility of the invention, comprising a parking spot which comprises a reference element located on a wall or a barrier of the parking spot,
- figure 8 shows an electric vehicle having a plurality of sensors on a charging spot according to a non-limitative possibility of the invention, comprising a parking spot which comprises two reference elements located on a wall or a barrier of the parking spot and a reference element located on a charging station, which is arranged on the ground of the parking spot,
- figure 9 shows an electric vehicle having one sensor on a charging spot according to another non-limitative possibility of the invention, comprising a parking spot which comprises a reference element located on the charging station which is arranged on the ground of the parking spot,
- figure 10 shows an electric vehicle having a sensor on a charging spot according to another objet of the invention, comprising a parking spot which comprises a wheel chock.

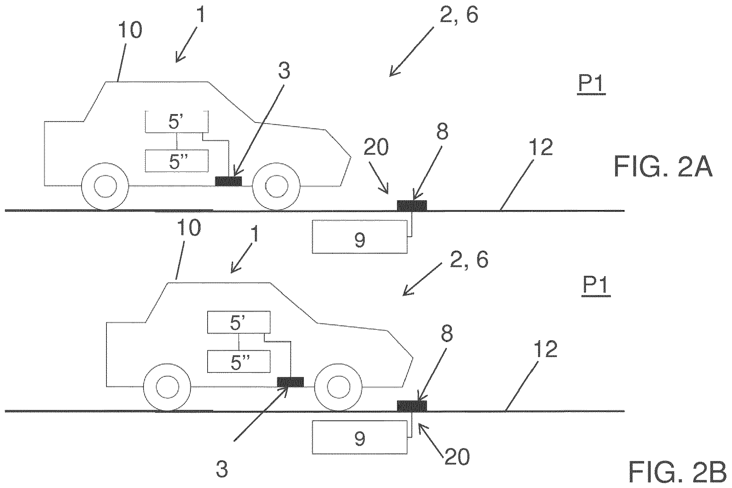

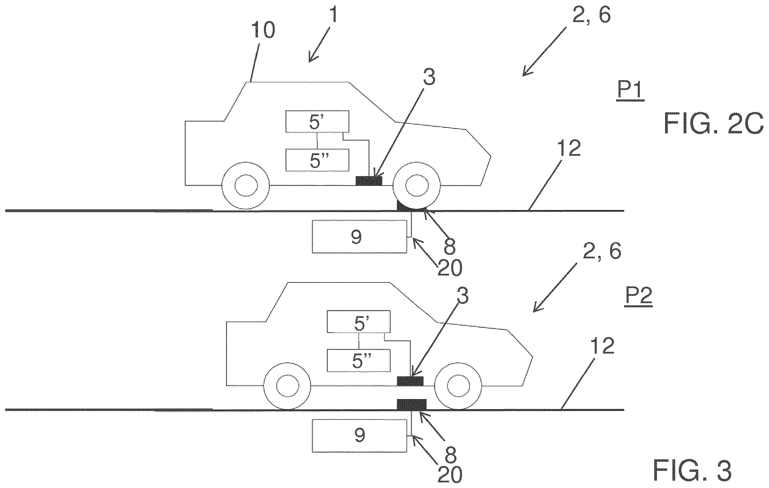

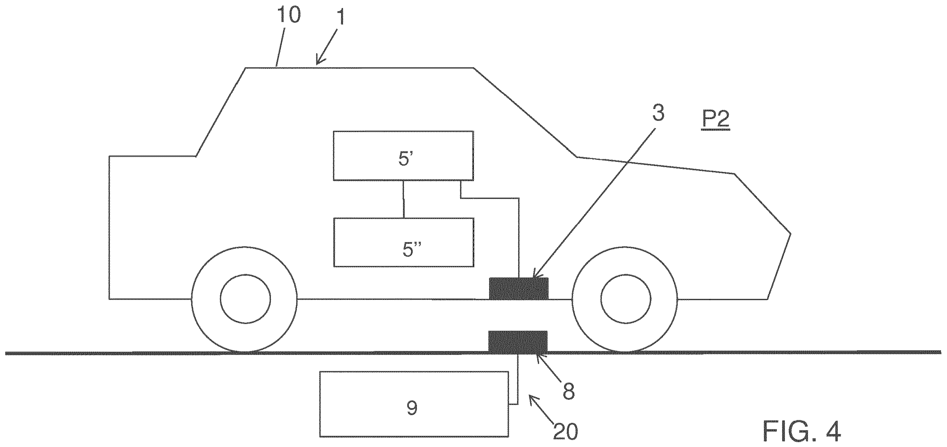

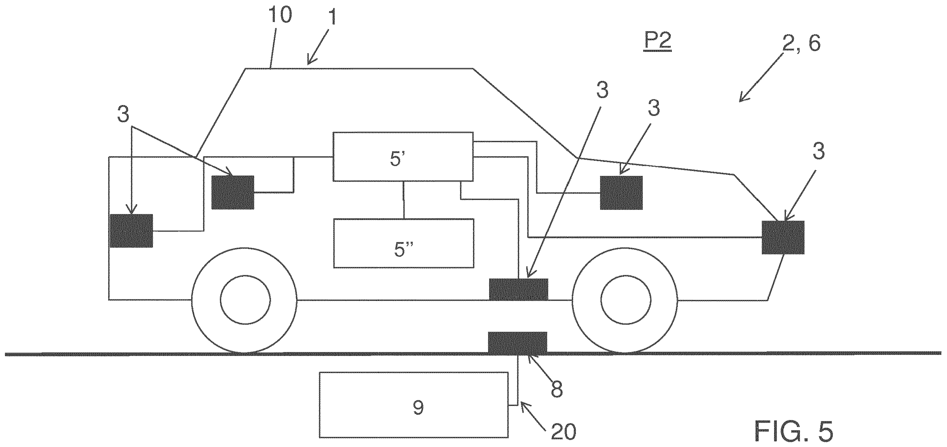

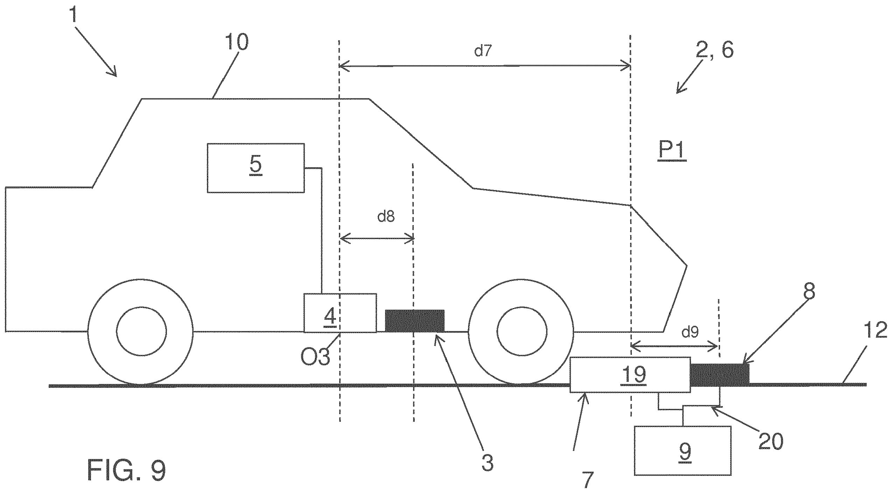

The invention relates to a method for positioning an electric vehicle 1 on a charging spot 2, the electric vehicle 1 comprising at least one sensor 4, a primary control unit 5 and a chassis 10, the charging spot 2 comprising at least one parking spot 6 including at least one reference element 7, a charging station 20 comprising a charger plug 8 for at least supplying electric energy to the electric vehicle 1 and a secondary control unit 9, the charger plug 8 being able to cooperate with the charging receiver 3 of the electric vehicle 1, method comprising the steps of:
moving the electric vehicle 1 to the parking spot 6 to reach a parking position P1 (figures 2A, 2B, 2C and 9), then
determining an alignment position P2 of the electric vehicle 1 where the charging receiver 3 and the charger plug 8 align, by determining a reference distance d3, d6, d7 between at least one point O1, 02, O3 of the chassis 10 and the at least one reference element 7 by means of the primary control unit 5 of the electric vehicle 1, knowing the distance d1, d5, d8 between the charging receiver 3 and the at least one point O1, 02, O3 of the chassis 10 and knowing the distance d2, d4, d9 between the at least one reference element 7 and the charger plug 8, then
moving the electric vehicle 1 on the parking spot 6 from the parking position P1 to the alignment position P2 by means of the at least one sensor 4 of the electric vehicle 1 and at least one sensor 18, 19 of the reference element 7, which measures the actual distance d3, d6, d7 between the at least one point O1, O2, O3 of the chassis 10 and the at least one reference element 7 and by means of the primary control unit 5, which
   compares the actual distance d3, d6, d7 and the predetermined reference distance d3, d6, d7, for parking the electric vehicle 1 at the predetermined reference distance d3, d6, d7 from the reference element 7, so that the charging receiver 3 of the electric vehicle 1 and the charger plug 8 of the charging spot 2 align (figures 3, 4, 5, 6, 7 and 8).

This method enables to determine with high precision, the best position of the electric vehicle 1 on the parking spot 6, the alignment position P2, i.e. where the charging receiver 3 and the charger plug 8 are perfectly aligned. This alignment position P2 being known from the primary control unit 5 of the electric vehicle 1, the electric vehicle 1 can adjust its position to reach this alignment position P2. Thus, the connection between the charging receiver 3 and the charger plug 8 is easier.

The method comprises: when the electric vehicle 1 reaches the parking position P1 or initially before starting the parking process, sending data representative of the distance d2, d4, d9 between the at least one reference element 7 and the charger plug 8, from a secondary communication module of the secondary control unit 9 to a primary communication module of the primary control unit 5.

This data sending enables the primary control unit to determine the reference distance d3, d6, d7 from the data sent by the charging spot 2, which depends on this particular charging spot 2 configuration. Thus, this method can be used whatever the configuration of the charging spot 2 is.

Preferably, the distance d1, d5, d8 between the charging receiver 3 and the at least one point O1, O2, O3 of the chassis 10 can be store in the primary control unit 5 by the electric vehicle 1 manufacturer.

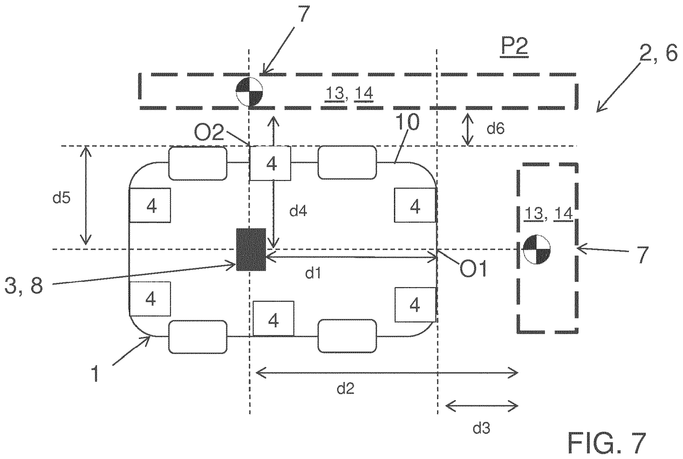

In a first preferred embodiment which is not according to the present invention, when moving the electric vehicle 1 on the parking spot 6 from the parking position P1 to the alignment position P2, the at least one sensor 4 of the electric vehicle 1 controlled by the primary control unit 5 measures the actual distance d3, d6, d7 and then sends the actual distance d3, d6, d7 to the primary control unit 5 (figures 7, 8 and 9).

This step enables to measure the actual distance d3, d6, d7 by only using the sensor 4 of the electric vehicle 1. In this case, the sensor 4 of the electric vehicle 1 plays an active role, whereas the reference element 7 only plays a passive role. Consequently, no sensor is required on the reference element 7. Thus, the electric vehicle 1 is guided and controlled by the primary control unit 5 and the sensor 4 of the electric vehicle 1, which are able to identify the reference element 7 located outside the electric vehicle 1, on the charging spot 2.

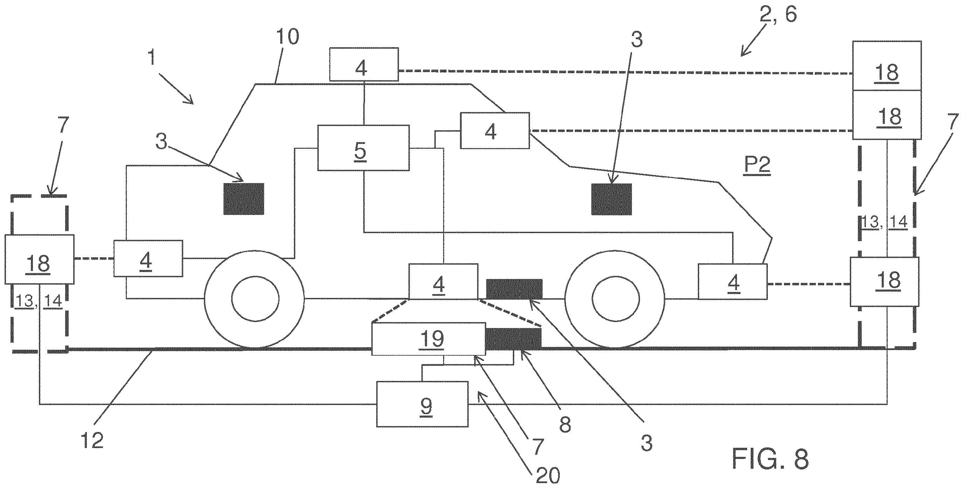

According to the invention, when moving the electric vehicle 1 on the parking spot 6 from the parking position P1 to the alignment position P2, the at least one sensor 18, 19 of the reference element 7, controlled by the secondary control unit 9, measures the actual distance d3, d6, d7 and then sends the actual distance d3, d6, d7 to the secondary control unit 9, which then sends this distance data to the primary control unit 5 (figures 8 and 9).

This step enables to measure the actual distance d3, d6, d7 by only using the sensor 18, 19 of the reference element 7 of the charging spot 2. In this case, the sensor 18, 19 of the reference element 7 plays an active role. Consequently, no sensor is needed on the electric vehicle 1. Thus, the electric vehicle 1 is guided and controlled by the primary control unit 5, which is in communication with the secondary control unit 9.

According to a non-limitative specificity of the invention, the at least one sensor 4 of the electric vehicle 1 and/or the at least one sensor 18, 19 of the reference element 7, is an ultrasonic sensor emitting an ultrasonic wave and detecting the reflected ultrasonic wave coming from the reference element 7 or coming from the point O1, O2, O3 of the chassis 10.

According to another non-limitative specificity of the invention, the at least one sensor 4 of the electric vehicle 1 and/or the at least one sensor 18, 19 of the reference element 7, is a radar or a lidar emitting electromagnetic waves and detecting the reflected electromagnetic waves coming from the reference element 7 or from the point O1, O2, O3 of the chassis 10.

According to another non-limitative specificity of the invention, the at least one sensor 4 of the electric vehicle 1 and/or the at least one sensor 18, 19 of the reference element 7, is a camera capturing the image of the reference element 7 or of the point O1, O2, O3 of the chassis 10.

According to a non-limitative particularity of this specificity, the camera captures the image of the reference element 7 located on the ground 12 of the parking spot 6.

In a third preferred embodiment which is not according to the present invention, when moving the electric vehicle 1 on the parking spot 6 from the parking position P1 to the
alignment position P2, the at least one sensor 4 of the electric vehicle 1 controlled by the primary control unit 5 is a receiver and the at least one sensor 18, 19 of the reference element 7 is an emitter, the emitter emitting an electromagnetic radiation and the receiver detecting the radiation to measure the actual distance d3, d6 and sends the actual distance d3, d6 to the primary control unit 5.

This step enables to measure the actual distance d3, d6, d7 by using the sensor 4 of the electric vehicle 1 together with the sensor 18, 19 of the reference element 7 of the charging spot 2. In this case, the sensor 4 of the electric vehicle 1 and the sensor 18, 19 of the reference element 7 play active roles. Thus, the electric vehicle 1 is guided and controlled by the primary control unit 5 and the sensor 4 of the electric vehicle 1, which are able to cooperate with the sensor 18, 19 of the reference element 7 located outside the electric vehicle 1 on the charging spot 2.

According to another non-limitative specificity of this third embodiment which is not according to the present invention, the emitter is an infrared emitter and the receiver is an infrared receiver.

Preferably, when comparing the actual distance d3, d6, d7 and the predetermined reference distance d3, d6, d7, if the actual distance d3, d6, d7 is equal to the predetermined reference distance d3, d6, d7 then the primary control unit 5 sends an order to the electric vehicle 1 to stop the electric vehicle 1.

This step enables to determine if the electric vehicle 1 is in the alignment position P2. Thus, the electric vehicle 1 stops and a charging session can start on the charging spot 2.

Preferably, when comparing the actual distance d3, d6, d7 and the predetermined reference distance d3, d6, d7, if the actual distance d3, d6, d7 is different from the predetermined reference distance d3, d6, d7 then the primary control unit 5 sends an order to the electric vehicle 1 to move the electric vehicle 1 to adjust the actual distance d3, d6, d7 and reach the alignment position P2.

This step enables to adjust the electric vehicle 1 position while the electric vehicle 1 is not in the alignment position P2.

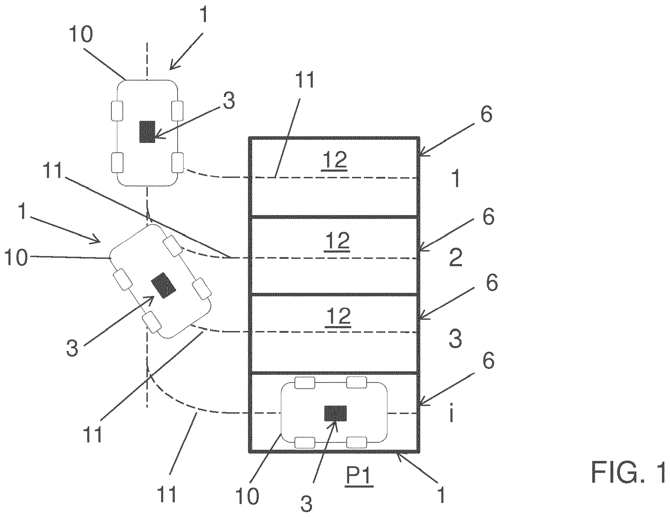

Preferably, when first moving the electric vehicle 1 to reach the parking position P1, the at least one sensor 4 of the electric vehicle 1, controlled by the primary control unit 5, detects a marking element 11 located on the ground 12 of the parking spot 6 for automatically positioning the electric vehicle 1 on the parking spot 6 (figure 1).

This step enables the automatic guidance of the electric vehicle toward the parking spot 6.

According to the inventionwhen the electric vehicle 1 is in the alignment position P2, the method further comprises a charging session step, where the charger plug 8 and the charging receiver 3 are connected together, and electric energy is supplied to a battery 5" of the electric vehicle 1.

Preferably, the primary control unit 5 of the electric vehicle 1 comprises the primary communication module.

This primary control unit is provided to communicate with the secondary communication module of the secondary control unit 9 of the charging station 20, preferably wirelessly.

These primary and secondary communication modules are provided to exchange data between the charging spot 2 and the electric vehicle 1.

For instance, the secondary communication module can send data representative of the distance d2, d4, d9 to the primary communication module of the primary control unit 5. The primary control unit 5 can collect these data and determine the reference distance d3, d6, d7.

Preferably, the primary control unit 5 of the electric vehicle 1 is also electrically connected to the sensor 4 of the electric vehicle 1.

Preferably, the primary control unit 5 is also suitable and provided to control the sensor 4 of the electric vehicle 1 and to collect the data of the sensor 4, which are representative of the actual distance d3, d6, d7.

Preferably, the secondary control unit 9 is suitable and provided to control the sensor 18, 19 of the reference element 7 and to collect the data of the sensor 18, 19, which are representative of the actual distance d3, d6, d7.

Preferably, the secondary control unit 9 is also suitable and provided to send these data to the primary control unit 5 by means of the primary and secondary communication modules.

Preferably, the primary control unit 5 is also suitable and provided to compare the data, which are representative of the actual distance d3, d6, d7 with the reference distance d3, d6, d7.

The primary control unit 5 is also suitable and provided to automatically move the electric vehicle 1.

Preferably, the electric vehicle 1 comprises the battery 5" electrically connected to the charging receiver 3 of the electric vehicle 1. The battery 5" and the charging receiver 3 are preferably controlled by an electronic unit 5'. This electronic unit 5' can be electrically connected to the primary control unit 5 of the electric vehicle 1. Preferably, this electronic unit 5' could be an on board charger, which comprises a rectifier (not shown), which converts an alternating current (AC) current in direct current (DC), which is required to charge the battery 5". This rectifier is required if the charger plug 8 supplies alternating current (AC) to the charging receiver 3. In the case, where the charger plug 8 supplies direct current (DC) to the charging receiver 3, a rectifier is not required. Moreover preferably, the electronic unit 5' comprises a protection device and/or a switch, like a contactor (not shown), to open or close a circuit between the charging receiver 3 and battery 5".

The invention also relates to a charging spot 2 comprising at least one parking spot 6 and a charging station 20 comprising a charger plug 8 for at least supplying electric energy to the electric vehicle 1, wherein the parking spot 6 comprises at least one reference element 7.

This reference element 7 is provided to be identified by the sensor 4 of the electric vehicle 1 and/or to identify the electric vehicle 1. This charging spot 2 is provided to enable the implementation of the method according to the present invention.

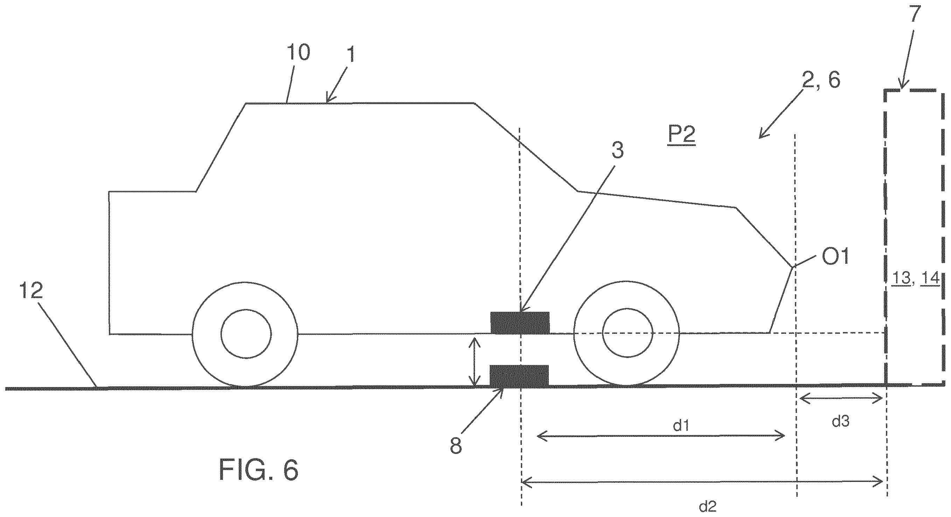

According to non-limitative possibilities of the invention, the at least one reference element 7 is located on the ground 12 of the parking spot 6 (figures 8 and 9), and/or on a wall 13 (figures 6, 7 and 8) and/or a barrier 14 (figures 6, 7 and 8) surrounding the parking spot 6.

In a preferred embodiment, the charging spot 2 comprises a secondary control unit 9 comprising a secondary communication module to communicate with a primary communication module of the primary control unit of the electric vehicle 1. Preferably, the primary communication module and secondary communication module could be any kind of wireless communication means, for instance: a Bluetooth unit or a RFID unit or a NFC unit or a Wi-Fi unit.

According to the invention, the at least one reference element 7 comprises at least one sensor 18, 19 (figures 8 and 9).

This sensor 18, 19 is provided to identify the electric vehicle 1 and to measure the actual distance d3, d6, d7.

According to a specificity of this preferred embodiment, the secondary control unit 9 is provided to control the sensor 18, 19. Preferably, the secondary control unit 9 is located on the charging station 20 and is electrically connected to the sensor 18, 19.

According to a non-limitative specificity of this embodiment, the charging station 20 is located on the ground 12 and comprises the reference element 7 arranged in the vicinity of the charger plug 8, the reference element 7 comprising at least one sensor 19 (figures 8 and 9).

In this configuration, when the sensor 19 is located on the charging station 20, there is no need to add any additional reference element 7 on the parking spot 6.

Preferably, the at least one sensor 18, 19 of the reference element 7 is selected from the group comprising: an ultrasonic sensor, a radar, a lidar, a camera, an infrared emitter, an infrared receiver.

Preferably, a marking element 11 is located on the ground 12 of the parking spot 6 (figure 1).

The marking element 11 is provided to be identified by the sensor 4 of the electric vehicle 1 controlled by the primary control unit 5. Thus, the electric vehicle 1 can be automatically positioned on the parking spot 6. In this case, the sensor 4, which is used, preferably is a camera.

The marking element 11 can be a line on the ground 12.

Preferably, the charging station 20 comprises at least a power supply system (not shown) to provide electric energy.

Preferably, the charging station 20 comprises at least a supply cable (not shown) electrically connected to the charger plug 8 and to the power supply system.

Preferably, the charging station 20 comprises a cooling system (not shown) to maintain the battery 5" of the electric vehicle 1within an acceptable temperature range during a charging session.

Preferably, the charging station 20 comprises fluid lines (not shown) connected to the charger plug 2 and to the cooling system.

Preferably, the charging station 20 is located on the ground 12 of the parking spot 6.

Preferably, the power supply and/or the cooling system are controlled by the secondary control unit 9.

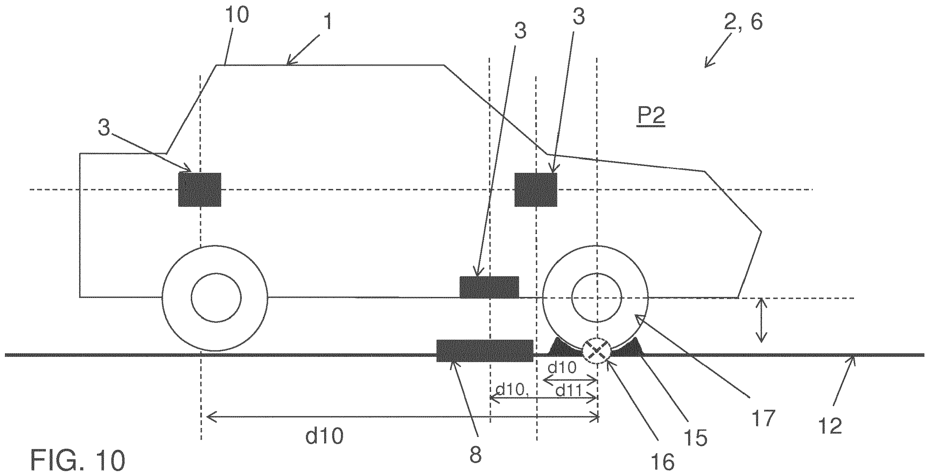

Another object relates to an alternative method for positioning an electric vehicle 1 on a charging spot 2 which is not according to the invention, the charging spot 2 comprising at least one parking spot 6 including at least one wheel chock 15 comprising a sensor 16 and a charging station 20 comprising a charger plug 8 for at least supplying electric energy to the electric vehicle 1, the charger plug 8 being able to cooperate with the charging receiver 3 of the electric vehicle 1 (figure 10), method comprising:
moving the electric vehicle 1 on the parking spot 6 until the front wheels 17 of the electric vehicle 1 are locked by the wheel chock 15,
detecting with the sensor 16 that the front wheels 17 are locked by the wheel chock 15.

In this embodiment, the distance d10 between the axis of the front wheels 17 and the charging receiver 3, as well as the distance d11 between the wheel chock 15 and the charger plug 8 are standard distances, and these distances d10, d11 are equal. Therefore, the charger plug 8 could be electrically easily connected to the charging receiver 3, as the charger plug 8 and the charging receiver 3 are aligned, when the sensor 16 has detected that the front wheels 17 are locked by the wheel chock 15.

According to an alternative embodiment, these distances d10, d11 are not necessarily equal. In this case, the method includes the further steps of:
sending the date representative of the distance d10 between the axis of the front wheels 17 and the charging receiver 3, and/or the front wheels 17 pressure from the primary control unit 5 of the electric vehicle 1 to the secondary control unit 9 of the charging station 20,
determining the trajectory of the charger plug 8 by means of the secondary control unit 9 knowing the distance d11 and distance d10.

After that, the charger plug 8 could be moved by means of an actuator knowing the distance d10 and the distance d11 and then be electrically connected to the charging receiver 3.

More particularly in this alternative embodiment, the method preferably includes the step of sending the distance d10 from a primary communication module of the primary control unit 5 to a secondary communication module of the secondary control unit 9.

A charging spot 2 which is not according to the invention comprises at least one parking spot 6 and a charging station 20 comprising a charger plug 8 for at least supplying electric energy to an electric vehicle 1, wherein the parking spot 6 comprises at least one wheel chock 15 fixed to the ground 12 of the parking spot 6 (figure 10), the wheel chock 15 and the charger plug 8 of the charging station 20 being separated from one to another by a distance d11

This charging spot 2 is provided to enable the implementation of this alternative method according to the other object which is not according to the present invention.

Preferably, the wheel chock 15 is a groove located on the ground 12 of the parking spot 6 (figure 10).

Preferably, the charging station 20 is located on the ground 12 of the parking spot 6 (figure 10).

According to the invention, the charger plug 8 is mounted on an actuator located on the ground 12, like for instance an arm (not shown) or a scissor lift (not shown) to move the charger plug 8 toward the charging receiver 3 in translation and/or in rotation.

In a preferred embodiment, the charging station 20 comprises the secondary control unit 9. This secondary control unit 9 comprises a secondary communication module.

The primary communication module and secondary communication module could be any kind of wireless communication means, for instance: a Bluetooth unit or a RFID unit or a NFC unit or a Wi-Fi unit.

In a preferred embodiment which is not according to the invention, the wheel chock 15 comprises a sensor 16. This sensor 16 could be an optical sensor or a weight sensor.

Of course, the invention is not limited to the at least one embodiment described and represented in the accompanying drawings. Modifications remain possible, particularly from the viewpoint of the composition of the various elements or by substitution of technical equivalents without thereby exceeding the field of protection of the invention defined by the claims.

## Claims

1. A method for positioning an electric vehicle (1) on a charging spot (2), the electric vehicle (1) comprising at least one sensor (4), a primary control unit (5) and a chassis (10), the charging spot (2) comprising at least one parking spot (6) including at least one reference element (7), a charging station (20) comprising a charger plug (8) for at least supplying electric energy to the electric vehicle (1) and a secondary control unit (9), the charger plug (8) being able to cooperate with the charging receiver (3) of the electric vehicle (1), method comprising the steps of:
moving the electric vehicle (1) to the parking spot (6) to reach a parking position (P1),
determining an alignment position (P2) of the electric vehicle (1) where the charging receiver (3) and the charger plug (8) align, by determining a reference distance (d3, d6, d7) between at least one point (O1, O2, O3) of the chassis (10) and the at least one reference element (7) by means of the primary control unit (5) of the electric vehicle (1), knowing the distance (d1, d5, d8) between the charging receiver (3) and the at least one point (01, 02, O3) of the chassis (10) and knowing the distance (d2, d4, d9) between the at least one reference element (7) and the charger plug (8),
moving the electric vehicle (1) on the parking spot (6) from the parking position (P1) to the alignment position (P2) by being guided and controlled by means of the at least one sensor (4) of the electric vehicle (1) and at least one sensor (18, 19) of the reference element (7), which measures the actual distance (d3, d6, d7) between the at least one point (O1, O2, O3) of the chassis (10) and the at least one reference element (7) and by means of the primary control unit (5), which compares the actual distance (d3, d6, d7) and the predetermined reference distance (d3, d6, d7), for parking the electric vehicle (1) at the predetermined reference distance (d3, d6, d7) from the reference element (7), so that the charging receiver (3) of the electric vehicle (1) and the charger plug (8) of the charging spot (2) align,
**characterized in that** the method comprises: when the electric vehicle (1) reaches the parking position (P1) or initially before starting the parking process, sending data representative of the distance (d2, d4, d9) between the at least one reference element (7) and the charger plug (8), from a secondary communication module of the secondary control unit (9) to a primary communication module of the primary control unit (5), the primary control unit (5) collecting these data so as to determine the reference distance (d3, d6, d7),
wherein when moving the electric vehicle (1) on the parking spot (6) from the parking position (P1) to the alignment position (P2), the at least one sensor (18, 19) of the reference element (7), controlled by the secondary control unit (9), measures the actual distance (d3, d6, d7) and then sends the actual distance (d3, d6, d7) to the secondary control unit (9), which then sends this distance data to the primary control unit (5),
the charger plug (8) is mounted on an actuator located on the ground (12) to move the charger plug (8) toward the charging receiver (3) in translation and/or in rotation,
and when the electric vehicle (1) is in the alignment position (P2), the method further comprises a charging session step, where the charger plug (8) and the charging receiver (3) are electrically connected together, and electric energy is supplied to a battery (5") of the electric vehicle (1).

2. The method according claim 1, wherein the at least one sensor (4) of the electric vehicle (1) and/or the at least one sensor (18, 19) of the reference element (7), is an ultrasonic sensor emitting an ultrasonic wave and detecting the reflected ultrasonic wave coming from the reference element (7) or coming from the point (O1, O2, O3) of the chassis (10).

3. The method according to any of claims 1 to 2, wherein the at least one sensor (4) of the electric vehicle (1) and/or the at least one sensor (18, 19) of the reference element (7), is a radar or a lidar emitting electromagnetic waves and detecting the reflected electromagnetic waves coming from the reference element (7) or from the point (O1, O2, O3) of the chassis (10).

4. The method according to any of claims 1 to 3, wherein the at least one sensor (4) of the electric vehicle (1) and/or the at least one sensor (18, 19) of the reference element (7) is a camera capturing the image of the reference element (7) or of the point (O1, O2, O3) of the chassis (10).

5. The method according to claim 4, wherein the camera captures the image of the reference element (7) located on the ground (12) of the parking spot (6).

6. The method according to any of claims 1 to 5, wherein when comparing the actual distance (d3, d6, d7) and the predetermined reference distance (d3, d6, d7), if the actual distance (d3, d6, d7) is equal to the predetermined reference distance (d3, d6, d7), then the primary control unit (5) sends an order to the electric vehicle (1) to stop the electric vehicle (1).

7. The method according to any of claims 1 to 5, wherein when comparing the actual distance (d3, d6, d7) and the predetermined reference distance (d3, d6, d7), if the actual distance (d3, d6, d7) is different from the predetermined reference distance (d3, d6, d7), then the primary control unit (5) sends an order to the electric vehicle (1) to move the electric vehicle (1) to adjust the actual distance (d3, d6, d7) and reach the alignment position (P2).

8. The method according to any of claims 1 to 7 wherein when first moving the electric vehicle (1) to reach the parking position (P1), the at least one sensor (4) of the electric vehicle (1) controlled by the primary control unit (5) detects a marking element (11) located on the ground (12) of the parking spot (6) for automatically positioning the electric vehicle (1) on the parking spot (6).

9. A charging spot (2) configured to enable the implementation of the method according to claims 1 to 8, comprising at least one parking spot (6) and a charging station (20) comprising a charger plug (8) suitable for at least supplying electric energy to an electric vehicle (1) comprising at least one sensor (4), a primary control unit (5), a charging receiver (3) and a chassis (10), wherein the parking spot (6) comprises at least one reference element (7), and the charger plug (8) is mounted on an actuator located on the ground (12) to move the charger plug (8) toward the charging receiver (3) in translation and/or in rotation and wherein the at least one reference element (7) comprises the at least one sensor (18, 19) provided to identify the electric vehicle (1) and to measure the actual distance (d3, d6, d7) between the at least one point (O1, O2, O3) of the chassis (10) and the at least one reference element (7).

10. The charging spot according to claim 9, wherein the at least one reference element (7) is located on the ground (12) of the parking spot (6), and/ or on a wall (13), and/or a barrier (14) surrounding the parking spot (6).

11. The charging spot according to any of claims 9 to 10, wherein the charging station (20) is located on the ground (12).

12. The charging spot according to any of claims 9 to 11, wherein the at least one sensor (18, 19) of the reference element (7) is selected from the group comprising: an ultrasonic sensor, a radar, a lidar, a camera, an infrared emitter, an infrared receiver.

13. The charging spot according to any of claims 9 to 12, wherein a marking element (11) is located on the ground (12) of the parking spot (6), said marking element being provided to be identified by the sensor (4) of the electric vehicle (1) controlled by the primary control unit (5).

## Patentansprüche

1. Verfahren zum Positionieren eines Elektrofahrzeugs (1) auf einer Ladestelle (2), wobei das Elektrofahrzeug (1) mindestens einen Sensor (4), eine primäre Steuereinheit (5) und ein Fahrgestell (10) umfasst, wobei die Ladestelle (2) mindestens eine Parkstelle (6), die mindestens ein Referenzelement (7) beinhaltet, eine Ladestation (20), die einen Ladestecker (8) mindestens zum Zuführen von elektrischer Energie zum Elektrofahrzeug (1) umfasst, und eine sekundäre Steuereinheit (9) umfasst, wobei der Ladestecker (8) in der Lage ist, mit dem Ladeempfänger (3) des Elektrofahrzeugs (1) zusammenzuwirken, wobei das Verfahren die folgenden Schritte umfasst:
Bewegen des Elektrofahrzeugs (1) zur Parkstelle (6), um eine Parkposition (P1) zu erreichen,
Bestimmen einer Ausrichtungsposition (P2) des Elektrofahrzeugs (1), in der der Ladeempfänger (3) und der Ladestecker (8) ausgerichtet sind, durch Bestimmen eines Referenzabstands (d3, d6, d7) zwischen mindestens einem Punkt (01, O2, O3) des Fahrgestells (10) und dem mindestens einen Referenzelement (7) mittels der primären Steuereinheit (5) des Elektrofahrzeugs (1), Kennen des Abstands (d1, d5, d8) zwischen dem Ladeempfänger (3) und dem mindestens einen Punkt (01, O2, O3) des Fahrgestells (10) und Kennen des Abstands (d2, d4, d9) zwischen dem mindestens einen Referenzelement (7) und dem Ladestecker (8),
Bewegen des Elektrofahrzeugs (1) auf der Parkstelle (6) von der Parkposition (P1) zur Ausrichtungsposition (P2) durch Geführt- und Gesteuertwerden mittels des mindestens einen Sensors (4) des Elektrofahrzeugs (1) und mindestens eines Sensors (18, 19) des Referenzelements (7), der den tatsächlichen Abstand (d3, d6, d7) zwischen dem mindestens einen Punkt (01, O2, O3) des Fahrgestells (10) und dem mindestens einen Referenzelement (7) misst, und mittels der primären Steuereinheit (5), die den tatsächlichen Abstand (d3, d6, d7) und den vorbestimmten Referenzabstand (d3, d6, d7) vergleicht, zum Parken des Elektrofahrzeugs (1) in dem vorbestimmten Referenzabstand (d3, d6, d7) vom Referenzelement (7), derart, dass der Ladeempfänger (3) des Elektrofahrzeugs (1) und der Ladestecker (8) der Ladestelle (2) ausgerichtet sind,
**dadurch gekennzeichnet, dass** das Verfahren Folgendes umfasst: wenn das Elektrofahrzeug (1) die Parkposition (P1) erreicht, oder anfänglich vor Starten des Parkprozesses Senden von Daten, die für den Abstand (d2, d4, d9) zwischen dem mindestens einen Referenzelement (7) und dem Ladestecker (8) repräsentativ sind, von einem sekundären Kommunikationsmodul der sekundären Steuereinheit (9) an ein primäres Kommunikationsmodul der primären Steuereinheit (5), wobei die primäre Steuereinheit (5) diese Daten sammelt, um den Referenzabstand (d3, d6, d7) zu bestimmen, wobei, wenn das Elektrofahrzeug (1) auf der Parkstelle (6) von der Parkposition (P1) zur Ausrichtungsposition (P2) bewegt wird, der mindestens eine Sensor (18, 19) des Referenzelements (7), der von der sekundären Steuereinheit (9) gesteuert wird, den tatsächlichen Abstand (d3, d6, d7) misst und dann den tatsächlichen Abstand (d3, d6, d7) an die sekundäre Steuereinheit (9) sendet, die diese Abstandsdaten dann an die primäre Steuereinheit (5) sendet,
der Ladestecker (8) ist an einem Aktuator montiert, der sich auf dem Boden (12) befindet, um den Ladestecker (8) durch Versetzen und/oder durch Drehen zum Ladeempfänger (3) zu bewegen,
und wenn sich das Elektrofahrzeug (1) in der Ausrichtungsposition (P2) befindet, umfasst das Verfahren ferner einen Ladesitzungsschritt, in dem der Ladestecker (8) und der Ladeempfänger (3) elektrisch verbunden werden und einer Batterie (5") des Elektrofahrzeugs (1) elektrische Energie zugeführt wird.

2. Verfahren nach Anspruch 1, wobei der mindestens eine Sensor (4) des Elektrofahrzeugs (1) und/oder der mindestens eine Sensor (18, 19) des Referenzelements (7) ein Ultraschallsensor ist, der eine Ultraschallwelle emittiert und die reflektierte Ultraschallwelle, die vom Referenzelement (7) kommt oder von dem Punkt (01, O2, O3) des Fahrgestells (10) kommt, detektiert.

3. Verfahren nach einem der Ansprüche 1 bis 2, wobei der mindestens eine Sensor (4) des Elektrofahrzeugs (1) und/oder der mindestens eine Sensor (18, 19) des Referenzelements (7) ein Radar oder ein Lidar ist, das elektromagnetische Wellen emittiert und die reflektierten elektromagnetischen Wellen, die vom Referenzelement (7) oder von dem Punkt (01, O2, O3) des Fahrgestells (10) kommen, detektiert.

4. Verfahren nach einem der Ansprüche 1 bis 3, wobei der mindestens eine Sensor (4) des Elektrofahrzeugs (1) und/oder der mindestens eine Sensor (18, 19) des Referenzelements (7) eine Kamera ist, die das Bild des Referenzelements (7) oder des Punkts (01, O2, O3) des Fahrgestells (10) erfasst.

5. Verfahren nach Anspruch 4, wobei die Kamera das Bild des Referenzelements (7), das sich auf dem Boden (12) der Parkstelle (6) befindet, erfasst.

6. Verfahren nach einem der Ansprüche 1 bis 5, wobei, wenn der tatsächliche Abstand (d3, d6, d7) mit dem vorbestimmten Referenzabstand (d3, d6, d7) verglichen wird und der tatsächliche Abstand (d3, d6, d7) gleich dem vorbestimmten Referenzabstand (d3, d6, d7) ist, die primäre Steuereinheit (5) einen Befehl zum Stoppen des Elektrofahrzeugs (1) an das Elektrofahrzeug (1) sendet.

7. Verfahren nach einem der Ansprüche 1 bis 5, wobei, wenn der tatsächliche Abstand (d3, d6, d7) mit dem vorbestimmten Referenzabstand (d3, d6, d7) verglichen wird und sich der tatsächliche Abstand (d3, d6, d7) vom vorbestimmten Referenzabstand (d3, d6, d7) unterscheidet, die primäre Steuereinheit (5) einen Befehl zum Bewegen des Elektrofahrzeugs (1) an das Elektrofahrzeug (1) sendet, um den tatsächlichen Abstand (d3, d6, d7) anzupassen und die Ausrichtungsposition (P2) zu erreichen.

8. Verfahren nach einem der Ansprüche 1 bis 7, wobei, wenn zuerst das Elektrofahrzeug (1) bewegt wird, um die Parkposition (P1) zu erreichen, der mindestens eine Sensor (4) des Elektrofahrzeugs (1), der von der primären Steuereinheit (5) gesteuert wird, ein Markierungselement (11) detektiert, das sich auf dem Boden (12) der Parkstelle (6) befindet, um das Elektrofahrzeug (1) automatisch auf der Parkstelle (6) zu positionieren.

9. Ladestelle (2), die dazu ausgelegt ist, die Implementierung des Verfahrens nach einem der Ansprüche 1 bis 8 zu ermöglichen, und mindestens eine Parkstelle (6) und eine Ladestation (20) umfasst, die einen Ladestecker (8) umfasst, der geeignet ist, einem Elektrofahrzeug (1) elektrische Energie zuzuführen, das mindestens einen Sensor (4), eine primäre Steuereinheit (5), einen Ladeempfänger (3) und ein Fahrgestell (10) umfasst, wobei die Parkstelle (6) mindestens ein Referenzelement (7) umfasst und der Ladestecker (8) an einem Aktuator montiert ist, der sich auf dem Boden (12) befindet, um den Ladestecker (8) durch Versetzen und/oder durch Drehen zum Ladeempfänger (3) zu bewegen, und wobei das mindestens eine Referenzelement (7) mindestens einen Sensor (18, 19) umfasst, der bereitgestellt ist, um das Elektrofahrzeug (1) zu identifizieren und den tatsächlichen Abstand (d3, d6, d7) zwischen dem mindestens einen Punkt (01, O2, O3) des Fahrgestells (10) und dem mindestens einen Referenzelement (7) zu messen.

10. Ladestelle nach Anspruch 9, wobei sich das mindestens eine Referenzelement (7) auf dem Boden (12) der Parkstelle (6) und/oder an einer Wand (13) und/oder einer Absperrung (14), die die Parkstelle (6) umgibt, befindet.

11. Ladestelle nach einem der Ansprüche 9 bis 10, wobei sich die Ladestation (20) auf dem Boden (12) befindet.

12. Ladestelle nach einem der Ansprüche 9 bis 11, wobei der mindestens eine Sensor (18, 19) des Referenzelements (7) aus der Gruppe ausgewählt wird, die Folgendes umfasst: einen Ultraschallsensor, ein Radar, ein Lidar, eine Kamera, einen Infrarotemitter, einen Infrarotempfänger.

13. Ladestellen nach einem der Ansprüche 9 bis 12, wobei sich auf dem Boden (12) der Parkstelle (6) ein Markierungselement (11) befindet, wobei das Markierungselement bereitgestellt ist, um vom Sensor (4) des Elektrofahrzeugs (1), der von der primären Steuereinheit (5) gesteuert wird, identifiziert zu werden.

## Revendications

1. Procédé pour positionner un véhicule électrique (1) sur un point de recharge (2), le véhicule électrique (1) comprenant au moins un capteur (4), une unité de commande primaire (5) et un châssis (10), le point de recharge (2) comprenant au moins un point de stationnement (6) incluant au moins un élément de référence (7), une station de recharge (20) comprenant une prise de recharge (8) pour au moins effectuer l'alimentation en énergie électrique au véhicule électrique (1) et une unité de commande secondaire (9), la prise de recharge (8) étant capable de coopérer avec le récepteur de recharge (3) du véhicule électrique (1), le procédé comprenant les étapes de :
le déplacement du véhicule électrique (1) jusqu'au point de stationnement (6) pour atteindre une position de stationnement (P1),
la détermination d'une position d'alignement (P2) du véhicule électrique (1) où le récepteur de recharge (3) et la prise de recharge (8) s'alignent, en déterminant une distance de référence (d3, d6, d7) entre au moins un point (01, O2, O3) du châssis (10) et l'au moins un élément de référence (7) au moyen de l'unité de commande primaire (5) du véhicule électrique (1), connaissant la distance (d1, d5, d8) entre le récepteur de recharge (3) et l'au moins un point (01, O2, O3) du châssis (10) et connaissant la distance (d2, d4, d9) entre l'au moins un élément de référence (7) et la prise de recharge (8),
le déplacement du véhicule électrique (1) sur le point de stationnement (6) depuis la position de stationnement (P1) jusqu'à la position d'alignement (P2) en étant guidé et commandé au moyen de l'au moins un capteur (4) du véhicule électrique (1) et de l'au moins un capteur (18, 19) de l'élément de référence (7), qui mesure la distance réelle (d3, d6, d7) entre l'au moins un point (01, O2, O3) du châssis (10) et l'au moins un élément de référence (7) et au moyen de l'unité de commande primaire (5), qui compare la distance réelle (d3, d6, d7) et la distance de référence prédéterminée (d3, d6, d7), pour mettre en stationnement le véhicule électrique (1) à la distance de référence prédéterminée (d3, d6, d7) par rapport à l'élément de référence (7), pour que le récepteur de recharge (3) du véhicule électrique (1) et la prise de recharge (8) du point de recharge (2) s'alignent,
**caractérisé en ce que** le procédé comprend : lorsque le véhicule électrique (1) atteint la position de stationnement (P1) ou initialement avant de commencer le processus de stationnement, l'envoi de données représentatives de la distance (d2, d4, d9) entre l'au moins un élément de référence (7) et la prise de recharge (8), depuis un module de communication secondaire de l'unité de commande secondaire (9) à un module de communication primaire de l'unité de commande primaire (5), l'unité de commande primaire (5) collectant ces données afin de déterminer la distance de référence (d3, d6, d7),
dans lequel, lors du déplacement du véhicule électrique (1) sur le point de stationnement (6) depuis la position de stationnement (P1) jusqu'à la position d'alignement (P2), l'au moins un capteur (18, 19) de l'élément de référence (7), commandé par l'unité de commande secondaire (9), mesure la distance réelle (d3, d6, d7) et puis envoie la distance réelle (d3, d6, d7) à l'unité de commande secondaire (9), qui alors envoie ces données de distance à l'unité de commande primaire (5),
la prise de recharge (8) est montée sur un actionneur situé sur le sol (12) pour déplacer la prise de recharge (8) vers le récepteur de recharge (3) en translation et/ou en rotation,
et, lorsque le véhicule électrique (1) est dans la position d'alignement (P2), le procédé comprend en outre une étape de session de recharge, où la prise de recharge (8) et le récepteur de recharge (3) sont électriquement connectés l'un à l'autre, et une alimentation en énergie électrique à une batterie (5") du véhicule électrique (1) est effectuée.

2. Procédé selon la revendication 1, dans lequel l'au moins un capteur (4) du véhicule électrique (1) et/ou l'au moins un capteur (18, 19) de l'élément de référence (7) sont un capteur ultrasonique émettant une onde ultrasonique et détectant l'onde ultrasonique réfléchie provenant de l'élément de référence (7) ou provenant du point (01, O2, O3) du châssis (10).

3. Procédé selon l'une quelconque des revendications 1 à 2, dans lequel l'au moins un capteur (4) du véhicule électrique (1) et/ou l'au moins un capteur (18, 19) de l'élément de référence (7) sont un radar ou un lidar émettant des ondes électromagnétiques et détectant les ondes électromagnétiques réfléchies provenant de l'élément de référence (7) ou du point (01, O2, O3) du châssis (10).

4. Procédé selon l'une quelconque des revendications 1 à 3, dans lequel l'au moins un capteur (4) du véhicule électrique (1) et/ou l'au moins un capteur (18, 19) de l'élément de référence (7) sont une caméra capturant l'image de l'élément de référence (7) ou du point (01, O2, O3) du châssis (10).

5. Procédé selon la revendication 4, dans lequel la caméra capture l'image de l'élément de référence (7) situé sur le sol (12) du point de stationnement (6).

6. Procédé selon l'une quelconque des revendications 1 à 5, dans lequel, lors de la comparaison de la distance réelle (d3, d6, d7) et de la distance de référence prédéterminée (d3, d6, d7), si la distance réelle (d3, d6, d7) est égale à la distance de référence prédéterminée (d3, d6, d7), alors l'unité de commande primaire (5) envoie un ordre au véhicule électrique (1) d'arrêter le véhicule électrique (1).

7. Procédé selon l'une quelconque des revendications 1 à 5, dans lequel, lors de la comparaison de la distance réelle (d3, d6, d7) et de la distance de référence prédéterminée (d3, d6, d7), si la distance réelle (d3, d6, d7) est différente de la distance de référence prédéterminée (d3, d6, d7), alors l'unité de commande primaire (5) envoie un ordre au véhicule électrique (1) de déplacer le véhicule électrique (1) pour ajuster la distance réelle (d3, d6, d7) et atteindre la position d'alignement (P2).

8. Procédé selon l'une quelconque des revendications 1 à 7, dans lequel lors du premier déplacement du véhicule électrique (1) pour atteindre la position de stationnement (P1), l'au moins un capteur (4) du véhicule électrique (1) commandé par l'unité de commande primaire (5) détecte un élément de marquage (11) situé sur le sol (12) du point de stationnement (6) pour automatiquement positionner le véhicule électrique (1) sur le point de stationnement (6).

9. Point de recharge (2) configuré pour permettre la mise en œuvre du procédé selon les revendications 1 à 8, comprenant au moins un point de stationnement (6) et une station de recharge (20) comprenant une prise de recharge (8) appropriée pour au moins effectuer l'alimentation en énergie électrique à un véhicule électrique (1) comprenant au moins un capteur (4), une unité de commande primaire (5), un récepteur de recharge (3) et un châssis (10), dans lequel le point de stationnement (6) comprend au moins un élément de référence (7), et la prise de recharge (8) est montée sur un actionneur situé sur le sol (12) pour déplacer la prise de recharge (8) vers le récepteur de recharge (3) en translation et/ou en rotation, et dans lequel l'au moins un élément de référence (7) comprend l'au moins un capteur (18, 19) prévu pour identifier le véhicule électrique (1) et pour mesurer la distance réelle (d3, d6, d7) entre l'au moins un point (01, O2, O3) du châssis (10) et l'au moins un élément de référence (7).

10. Point de recharge selon la revendication 9, dans lequel l'au moins un élément de référence (7) est situé sur le sol (12) du point de stationnement (6), et/ ou sur une paroi (13), et/ou une barrière (14) entourant le point de stationnement (6).

11. Point de recharge selon l'une quelconque des revendications 9 et 10, dans lequel la station de recharge (20) est située sur le sol (12).

12. Point de recharge selon l'une quelconque des revendications 9 à 11, dans lequel l'au moins un capteur (18, 19) de l'élément de référence (7) est sélectionné parmi le groupe comprenant : un capteur ultrasonique, un radar, un lidar, une caméra, un émetteur infrarouge, un récepteur infrarouge.

13. Point de recharge selon l'une quelconque des revendications 9 à 12, dans lequel un élément de marquage (11) est situé sur le sol (12) du point de stationnement (6), ledit élément de marquage étant prévu pour être identifié par le capteur (4) du véhicule électrique (1) commandé par l'unité de commande primaire (5).
